# EUROPÄISCHE PATENTSCHRIFT

(11) **EP 3 040 947 B1**
(45) Veröffentlichungstag und Bekanntmachung des Hinweises auf die Patenterteilung: **14.06.2017**
(21) Anmeldenummer: 15198211.3
(22) Anmeldetag: 07.12.2015
(51) Int. Cl.: G07B 15/00, G07C 9/00, G06Q 20/32, G06Q 20/40

(54) **VERFAHREN ZUR VERMEIDUNG VON MISSBRAUCH VON ZUGANGSBERECHTIGUNGEN EINES ID-BASIERTEN ZUGANGSKONTROLLSYSTEMS**
METHOD FOR PREVENTING MISUSE OF ACCESS RIGHTS OF AN ID BASED ACCESS CONTROL SYSTEM
PROCÉDÉ DESTINÉ A ÉVITER LES MAUVAIS USAGES D'AUTORISATIONS D'ACCÈS D'UN SYSTÈME DE CONTRÔLE D'ACCÈS BASÉ SUR UN IDENTIFIANT

(30) Priorität: 11.12.2014 DE 102014118388
(43) Veröffentlichungstag der Anmeldung: 06.07.2016
(73) Patentinhaber: SKIDATA AG, 5083 Grödig/Salzburg (AT)
(72) Erfinder: Dr. Kerschbaumer, Andreas, 9020 Klagenfurt (AT)
(74) Vertreter: Karakatsanis, Georgios

(56) Entgegenhaltungen:
- WO-A1-2012/056049
- WO-A1-2014/012998

## Beschreibung

Die vorliegende Erfindung bezieht sich auf ein Verfahren zur Vermeidung von Missbrauch von Zugangsberechtigungen eines ID-basierten Zugangskontrollsystems.

ID-basierte Zugangskontrollsysteme verwenden die ID eines Kundenmediums, wobei die ID des Kundenmediums durch Zugangskontrollvorrichtungen des Zugangskontrollsystems ausgelesen und an einen zentralen Server übermittelt wird, welcher anhand der ID den Zugang über die die ID übermittelnde Zugangskontrollvorrichtung gewährt oder verweigert. Das Kundenmedium kann beispielsweise als RFID-Tag, RFID-Karte oder als Papierticket mit maschinenlesbaren Informationen ausgeführt sein.

ID-basierte Zugangskontrollsysteme weisen im Gegensatz zu den sogenannten Medium-basierten Zugangskontrollsystemen, bei denen der Zugang anhand der auf einem Kundenmedium abgelegten Informationen gewährt oder verweigert wird, ohne einen zentralen Server zu kontaktieren, den Vorteil auf, dass eine hohe Flexibilität und Skalierung gewährleistet wird. Eine ID eines Kundenmediums können mehrere Arten von Zugangsberechtigungen, beispielsweise für unterschiedliche Bereiche und unterschiedliche Zeiten und unterschiedliche Betreiber zugeordnet werden, was insbesondere bei Skigebieten von Vorteil ist.

Die verwendeten Kundenmedien können jedoch missbraucht werden, indem sie beispielsweise kopiert und verwendet werden. Dies resultiert zum einen in Umsatzeinbußen für die Betreiber der Zugangskontrollsysteme und zum anderen, für den Fall eines Post-Payment-Szenarios, in einer zu hohen Abrechnung für die Person, die das Kundenmedium rechtmäßig besitzt. Ferner kann es bei Missbrauch eines Kundenmediums auch dazu kommen, dass der Zugang für den rechtmäßigen Besitzer des Kundenmediums bei Verwendung des Original-Kundenmediums verweigert wird.

Wenn beispielsweise als Kundenmedien Standard-RFID-Tags verwendet werden, können diese frei programmiert werden, so dass ein Missbrauch ohne weiteres möglich ist. Ferner kann für den Fall von Barcode-Tickets ein Barcode-Ticket ohne weiteres kopiert werden.

Die Veröffentlichung WO 2014/012998 A1, vom 23.01.2014, beschreibt ein Verfahren zur Vermeidung von Missbrauch von Zugangsberechtigungen eines ID-basierten Zugangsdetektionssystems, insbesondere ein Parkplatzzeitverwaltungs- und -bezahlverfahren für Automobilfahrzeuge, umfassend zumindest eine Zugangsdetektionsvorrichtung und einen zentralen Server, mit dem die zumindest eine Zugangsdetektionsvorrichtung zum Zweck der Datenkommunikation verbindbar ist, wobei eine Datenbank des zentralen Servers eine ID des Kundenmediums enthalten kann, wobei wenn der Wagen parkiert ist, oder wenn der Wagen gestartet wird, vor dass er wegfahrt, am Besitzer des Kundenmediums eine Mitteilung gesendet werden kann, mit der Aufforderung die Zahlung der Parkgebühren mittels Einführen der PIN-Kode seiner Bezahlkarte zu gewähren, wobei solange keine Gewährung seitens des rechtmäßigen Benutzers am Zugangsdetektionssystems geschickt wird, ein Verlassen des vom Zugangsdetektionssystem abgedeckten Gebietes verweigert werden kann. Der vorliegenden Erfindung liegt die Aufgabe zugrunde, ein Verfahren zur Vermeidung von Missbrauch von Zugangsberechtigungen bei einem ID-basierten Zugangskontrollsystem anzugeben.

Diese Aufgabe wird durch die Merkmale des Patentanspruchs 1 gelöst. Weitere erfindungsgemäße Ausgestaltungen und Vorteile gehen aus den Unteransprüchen hervor.

Es wird ein Verfahren zur Vermeidung von Missbrauch von Zugangsberechtigungen eines ID-basierten Zugangskontrollsystems, umfassend zumindest eine Zugangskontrollvorrichtung und einen zentralen Server, mit dem die zumindest eine Zugangskontrollvorrichtung zum Zweck der Datenkommunikation verbindbar ist, vorgeschlagen, im Rahmen dessen in einer Datenbank des zentralen Servers pro Kundenmedium ein Datensatz abgelegt wird, der zumindest eine Kontaktadresse des rechtmäßigen Besitzers des Kundenmediums und die zumindest eine ID des Kundenmediums enthält. Die zumindest eine Kontaktadresse kann vom rechtmäßigen Besitzer beim Kauf der Zugangsberechtigung angegeben werden, beispielsweise über eine online-Transaktion.

Gemäß der Erfindung wird bei der ersten Interaktion zwischen einem Kundenmedium und einer Zugangskontrollvorrichtung des Zugangskontrollsystems bei gültiger Zugangsberechtigung der Zugang gewährt, wobei gleichzeitig oder innerhalb einer vorgegebenen, konfigurierbaren Zeitspanne nach der Interaktion anhand des im zentralen Server abgelegten Datensatzes und der ausgelesenen ID des Kundenmediums, der die Zugangsberechtigung zugeordnet ist, an eine Kontaktadresse des rechtmäßigen Besitzers des Kundenmediums eine Mitteilung gesendet wird, mit der Aufforderung zu bestätigen, dass die aktuelle Benutzung des Kundenmediums durch ihn erfolgt.

Solange keine Bestätigung seitens des rechtmäßigen Benutzers an eine vorgegebene Kontaktadresse des Zugangskontrollsystems geschickt wird, wird ein weiterer Zutritt über die Zugangskontrollvorrichtungen des Zugangskontrollsystems verweigert, wobei für den Fall eines Post-Payment-Szenarios ein Verlassen des vom Zugangskontrollsystem abgedeckten Gebietes verweigert wird.

Zugangskontrollsysteme mit einem Post-Payment-Szenario im Sinne der Erfindung sind Zugangskontrollsysteme, bei denen beim Verlassen des vom Zugangskontrollsystem abgedeckten Gebietes die entsprechenden Gebühren zu entrichten sind, um das Gebiet verlassen zu können.

Bei der ersten Interaktion zwischen dem Kundenmedium und einer Zugangskontrollvorrichtung des Zugangskontrollsystems wird die ID des Kundenmediums, der die Zugangsberechtigung zugeordnet ist, ausgelesen und an den zentralen Server übermittelt, wo zum einen die Zugangsberechtigung auf ihre Gültigkeit überprüft wird und zum anderen bei gültiger Zugangsberechtigung die Mitteilung an den rechtmäßigen Benutzer anhand des in der Datenbank im zentralen Servers abgelegten Datensatzes geschickt wird.

Die Art der Mitteilung, die vom Zugangskontrollsystem an den rechtmäßigen Besitzer des Kundenmediums geschickt wird, hängt von der Art der Kontaktadresse, die im entsprechenden Datensatz abgelegt ist, ab. Die Mitteilung kann beispielsweise eine E-Mail, eine SMS oder eine einer App in einem mobilen Gerät des Benutzers zugeordnete Kontaktadresse sein.

Die erforderliche Bestätigung seitens des Benutzers wird dementsprechend als SMS, E-Mail oder App-Nachricht an eine vorgegebene Kontaktadresse des Zugangskontrollsystems versendet.

Solange der rechtmäßige Besitzer des Kundenmediums die erforderliche Bestätigung nicht übermittelt, werden die Zugangsberechtigung, die ID des Kundenmediums, der die Zugangsberechtigung zugeordnet ist, sämtliche IDs des Kundenmediums, falls mehrere vorhanden sind, oder sämtliche IDs des rechtmäßigen Besitzers blockiert. Dies erfolgt durch Setzen eines entsprechenden Flags in der Datenbank des zentralen Servers des Zugangskontrollsystems. Wenn der rechtmäßige Besitzer die Bestätigung übermittelt und diese empfangen wird, wird dieses Flag gelöscht, wobei bei jeder weiteren Interaktion innerhalb des Zugangskontrollsystems zwischen dem Kundenmedium und den Zugangskontrollvorrichtungen für eine vorgegebene Zeit oder für eine vorgegebene Anzahl an Interaktionen zwischen dem Kundenmedium und einer der Zugangskontrollvorrichtungen des Zugangskontrollsystems eine normale Überprüfung der Zugangsberechtigung ohne das Versenden der Mitteilung mit der Aufforderung zur Bestätigung erfolgt.

Im Rahmen einer Weiterbildung der Erfindung kann das vom Zugangskontrollsystem abgedeckte Gebiet in Teilgebiete unterteilt werden, wobei das erfindungsgemäße Verfahren bei jeder ersten Interaktion zwischen einer Zugangskontrollvorrichtung und einem Kundenmedium in den jeweiligen Teilgebieten durchgeführt wird. Beispielsweise kann dadurch ein Missbrauch eines Kundenmediums für den Zugang zu den Liften, für die Einfahrt in ein Parkhaus und für den Zugang zu einem Wellness-Bereich eines Skigebietes vermieden werden.

Im Rahmen einer Weiterbildung der Erfindung kann vorgesehen sein, dass für den Fall eines Zugangskontrollsystems eines Parkhauses eine Bestätigung bei jeder Einfahrt erforderlich ist, unabhängig davon, ob eine zuvor erfolgte Einfahrt vom rechtmäßigen Besitzer des Kundenmediums bestätigt worden ist.

Gemäß der Erfindung kann für den Fall eines Zugangskontrollsystems mit einem Post-Payment-Szenario der Erhalt der Bestätigung des rechtmäßigen Benutzers optional einen entsprechenden Zahlungsvorgang über im zentralen Server abgelegte oder vom Benutzer einzugebende Konto- oder Kreditkartendaten auslösen, wodurch in vorteilhafter Weise ein pay per use-System implementiert werden kann. Beispielsweise braucht ein Skifahrer keinen Tagesskipass vorab zu kaufen, sondern kann diesen nach der ersten Interaktion mit einer Zugangskontrollvorrichtung des Skigebietes kaufen.

Vorzugsweise werden die Mitteilungen des Zugangskontrollsystems an mobile Geräte, beispielsweise an Mobiltelefone der rechtmäßigen Benutzer geschickt.

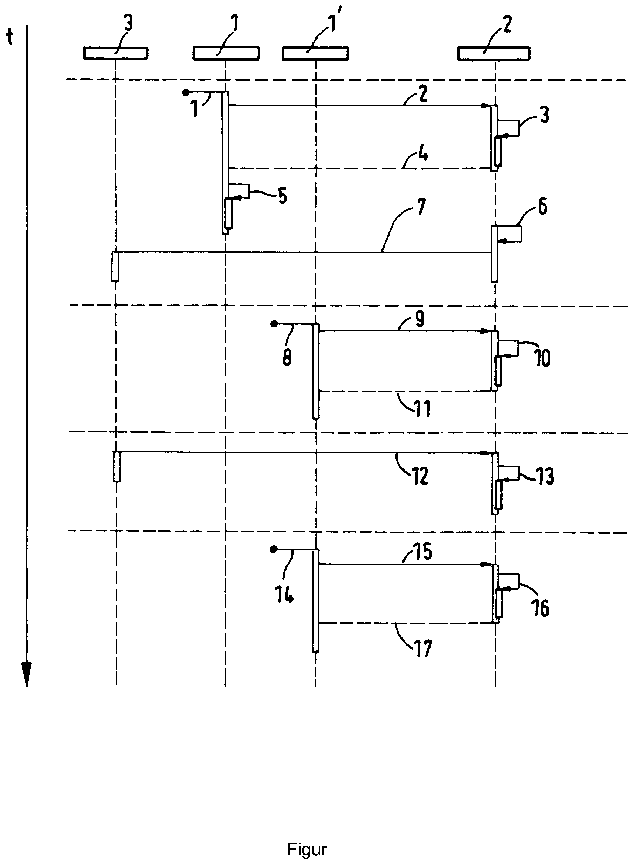

Die Erfindung wird im Folgenden anhand der beigefügten Figur beispielhaft näher erläutert.

Zu Beginn des erfindungsgemäßen Verfahrens wird bei der ersten Interaktion zwischen einem Kundenmedium und einer Zugangskontrollvorrichtung 1 die ID des Kundenmediums ausgelesen und an den zentralen Server 2 übermittelt (Schritte 1, 2), wobei im zentralen Server 2 die Gültigkeit der Zugangsberechtigung überprüft wird und bei gültiger Zugangsberechtigung die Transaktionsdaten gespeichert werden (Schritt 3) und an die Zugangskontrollvorrichtung 1 die Information "Zugang gewähren" übermittelt wird, wobei anschließend ein Sperrorgan der Zugangskontrollvorrichtung im Öffnungssinne betätigt wird (Schritt 5).

Gleichzeitig oder innerhalb einer vorgegebenen, konfigurierbaren Zeitspanne wird bei dem gezeigten Beispiel in einer Datenbank des zentralen Servers 2 die ID des Kundenmediums, der die Zugangsberechtigung zugeordnet ist, blockiert, was durch Setzen eines entsprechenden Flags erfolgt (Schritt 6) und es wird vom zentralen Server 2 an ein Mobiltelefon 3 des rechtmäßigen Besitzers, beispielsweise per SMS eine Mitteilung gesendet, mit der Aufforderung zu bestätigen, dass die aktuelle Benutzung des Kundenmediums durch ihn erfolgt (Schritt 7).

Solange keine Bestätigung seitens des rechtmäßigen Benutzers an das Zugangskontrollsystem geschickt wird, wird ein weiterer Zutritt über eine Zugangskontrollvorrichtung 1' des Zugangskontrollsystems verweigert (Schritte 8, 9, 10, 11). Bei dieser Interaktion wird die ID des Kundenmediums ausgelesen und an den zentralen Server 2 übermittelt (Schritte 8, 9), wobei im zentralen Server 2 ermittelt wird, ob die ID des Kundenmediums, der die Zugangsberechtigung zugeordnet ist, aufgrund einer noch ausstehenden Bestätigung blockiert ist (Schritt 10). Ist dies der Fall, so wird an die Zugangskontrollvorrichtung die Information "Zugang verweigern" übermittelt (Schritt 11).

Wenn die angeforderte Bestätigung des rechtmäßigen Besitzers des Kundenmediums vom Zugangskontrollsystem empfangen worden ist (Schritt 12), wird die Blockierung der ID im zentralen Server 2 durch Löschen des Flags aufgehoben (Schritt 13), so dass bei einer nächsten Interaktion zwischen dem Kundenmedium und einer Zugangskontrollvorrichtung 1' des Zugangskontrollsystems (Schritte 14, 15) und entsprechender Auswertung der ID im zentralen Server 2 (Schritt 16) an die Zugangskontrollvorrichtung 1' die Information "Zugang gewähren" übermittelt wird (Schritt 17).

## Patentansprüche

1. Verfahren zur Vermeidung von Missbrauch von Zugangsberechtigungen eines ID-basierten Zugangskontrollsystems, umfassend zumindest eine Zugangskontrollvorrichtung (1, 1') und einen zentralen Server (2), mit dem die zumindest eine Zugangskontrollvorrichtung (1,1') zum Zweck der Datenkommunikation verbindbar ist, **dadurch gekennzeichnet, dass** in einer Datenbank des zentralen Servers (2) pro Kundenmedium ein Datensatz abgelegt wird, der zumindest eine Kontaktadresse des rechtmäßigen Besitzers des Kundenmediums und die zumindest eine ID des Kundenmediums enthält, wobei bei der ersten Interaktion zwischen einem Kundenmedium und einer Zugangskontrollvorrichtung (1,1') des Zugangskontrollsystems bei gültiger Zugangsberechtigung der Zugang gewährt wird und gleichzeitig oder innerhalb einer vorgegebenen, konfigurierbaren Zeitspanne nach der Interaktion anhand des im zentralen Server (2) abgelegten Datensatzes und der ausgelesenen ID des Kundenmediums, der die Zugangsberechtigung zugeordnet ist, an eine Kontaktadresse des rechtmäßigen Besitzers des Kundenmediums eine Mitteilung gesendet wird, mit der Aufforderung zu bestätigen, dass die aktuelle Benutzung des Kundenmediums durch ihn erfolgt, wobei solange keine Bestätigung seitens des rechtmäßigen Benutzers an eine vorgegebene Kontaktadresse des Zugangskontrollsystems geschickt wird, ein weiterer Zutritt über die Zugangskontrollvorrichtungen (1,1') des Zugangskontrollsystems und für den Fall eines Post-Payment-Szenarios ein Verlassen des vom Zugangskontrollsystem abgedeckten Gebietes verweigert wird.

2. Verfahren zur Vermeidung von Missbrauch von Zugangsberechtigungen eines ID-basierten Zugangskontrollsystems, nach Anspruch 1, **dadurch gekennzeichnet, dass** bei der ersten Interaktion zwischen dem Kundenmedium und einer Zugangskontrollvorrichtung (1, 1') des Zugangskontrollsystems die ID des Kundenmediums, der die Zugangsberechtigung zugeordnet ist, ausgelesen und an den zentralen Server (2) übermittelt wird, wo zum einen die Zugangsberechtigung auf ihre Gültigkeit überprüft wird und zum anderen bei gültiger Zugangsberechtigung die Mitteilung an den rechtmäßigen Benutzer anhand des in der Datenbank im zentralen Servers (2) abgelegten Datensatzes geschickt wird, wobei solange der rechtmäßige Besitzer des Kundenmediums die erforderliche Bestätigung nicht übermittelt, die Zugangsberechtigung, die ID des Kundenmediums, der die Zugangsberechtigung zugeordnet ist, sämtliche IDs des Kundenmediums, falls mehrere vorhanden sind, oder sämtliche IDs des rechtmäßigen Besitzers blockiert werden, was durch Setzen eines entsprechenden Flags in der Datenbank des zentralen Servers (2) erfolgt, wobei wenn der rechtmäßige Besitzer die Bestätigung übermittelt und diese empfangen wird, das Flag gelöscht wird und wobei bei jeder weiteren Interaktion innerhalb des Zugangskontrollsystems zwischen dem Kundenmedium und den Zugangskontrollvorrichtungen (1,1') für eine vorgegebene Zeit oder für eine vorgegebene Anzahl an Interaktionen eine normale Überprüfung der Zugangsberechtigung ohne das Versenden der Mitteilung mit der Aufforderung zur Bestätigung erfolgt.

3. Verfahren zur Vermeidung von Missbrauch von Zugangsberechtigungen eines ID-basierten Zugangskontrollsystems, nach Anspruch 1 oder 2, **dadurch gekennzeichnet, dass** das vom Zugangskontrollsystem abgedeckte Gebiet in Teilgebiete unterteilt wird, wobei das Verfahren bei jeder ersten Interaktion zwischen einer Zugangskontrollvorrichtung (1,1') und einem Kundenmedium in den jeweiligen Teilgebieten durchgeführt wird.

4. Verfahren zur Vermeidung von Missbrauch von Zugangsberechtigungen eines ID-basierten Zugangskontrollsystems, nach einem der vorangehenden Ansprüche, **dadurch gekennzeichnet, dass** für den Fall eines Zugangskontrollsystems eines Parkhauses eine Bestätigung bei jeder Einfahrt erforderlich ist, unabhängig davon, ob eine zuvor erfolgte Einfahrt vom rechtmäßigen Besitzer des Kundenmediums bestätigt worden ist.

5. Verfahren zur Vermeidung von Missbrauch von Zugangsberechtigungen eines ID-basierten Zugangskontrollsystems, nach einem der vorangehenden Ansprüche, **dadurch gekennzeichnet, dass** für den Fall eines Zugangskontrollsystems mit einem Post-Payment-Szenario der Erhalt der Bestätigung des rechtmäßigen Benutzers einen entsprechenden Zahlungsvorgang über im zentralen Server (2) abgelegte oder vom Benutzer einzugebende Konto- oder Kreditkartendaten auslöst.

## Claims

1. A method of preventing misuse of access authorisations of an ID-based access control system, comprising at least one access control device (1, 1') and a central server (2) with which the at least one access control device (1, 1') is connectable for the purpose of data communication, **characterised in that** stored in a database of the central server (2) is a set of data per customer medium which contains at least one contact address of the legal owner of the customer medium and which contains at least one ID of the customer medium, wherein at the time of the first interaction between a customer medium and an access control device (1, 1') of the access control system access is permitted in the event of valid access authorisation and at the same time or within a predetermined, configurable time interval after the interaction by way of the data set stored in the central server (2) and the read-out ID of the customer medium, which is assigned to the access control authorisation, a message is sent to a contact address of the legal owner of the customer medium with a request to confirm that the customer medium is currently being used by him/her, wherein until a confirmation is sent by the legal user to the predefined contact address of the access control system, further access via the access control devices (1, 1') of the access control system and in the case of a post-payment scenario leaving of the area covered by the access control system is denied.

2. The method of preventing the misuse of access authorisations of an ID-based access control system according to claim 1, **characterised in that** at the time of first interaction between the customer medium and an access control device (1, 1') of the access control system, the ID which is assigned to the access authorisation is read out and transmitted to the central server (2) where on the one hand the validity of the access authorisation is checked and on the other hand in the case of valid access authorisation the message is sent to the legal user by means of the set of data stored in the database of the central server (2), wherein until the legal owner of the customer medium forwards the required confirmation, the access authorisation, the ID of the customer medium to which the access authorisation is assigned, all IDs of the customer medium, if several are available, or all IDs of the legal owner are blocked, which takes place by placing a corresponding flag in the database of the central server (2), wherein when the legal owner forwards the confirmation and this has been received, the flag is deleted and wherein at the time of every further interaction within the access control system between the customer medium and the access control devices (1, 1') for a predetermined time for a predetermined number of interactions normal checking of the access authorisation takes place without sending the message with a request for confirmation.

3. The method of preventing misuse of access authorisations of an ID-based access control system according to claim 1 or 2, **characterised in that** the area covered by the access control system is divided into sub-areas, wherein at the time of each first interaction between an access control device (1, 1') and a customer medium the method is implemented in the respective sub-areas.

4. The method of preventing misuse of access authorisations of an ID-based access control system according to any one of the preceding claims, **characterised in that** in the case of an access control system for a parking garage confirmation is required at the time of each entry, irrespective of whether an entry by the legal owner of the customer medium has previously been confirmed.

5. The method of preventing misuse of access authorisations of an ID-based access control system according to any one of the preceding claims, **characterised in that** in the case of an access control system with a post-payment scenario, receipt of the confirmation from the legal user triggers a corresponding payment process via account or credit card data stored in a central server (2) or to be entered by the user.

## Revendications

1. Procédé destiné à éviter un abus des droits d'accès d'un système de contrôle d'accès basé sur l'identification, comprenant au moins un dispositif de contrôle d'accès (1, 1') et un serveur central (2), avec lequel au moins un dispositif de contrôle d'accès (1, 1') peut être relié dans le but de la communication de données, **caractérisé en ce que** dans une banque de données du serveur central (2) un jeu de données est mémorisé par support de client, qui contient au moins une adresse de contact du propriétaire légitime du support de client et au moins une identification du support de client, l'accès étant garanti lors de la première interaction entre un support de client et un dispositif de contrôle d'accès (1, 1') du système de contrôle d'accès pour un droit d'accès valable et simultanément ou à l'intérieur d'un espace de temps prédéfini, configurable après l'interaction à l'aide du jeu de données mémorisé dans le serveur central (2) et de l'identification choisie du support de client, à laquelle le droit d'accès est attribué, une information étant envoyée à une adresse de contact du propriétaire légitime du support de client avec la sommation de confirmer que l'utilisation actuelle du support de client a lieu par lui, tant qu'aucune confirmation de la part du propriétaire légitime n'étant envoyée à une adresse de contact prédéfinie du système de contrôle d'accès, un autre accès par les dispositifs de contrôle d'accès (1, 1') du système de contrôle d'accès et pour le cas d'un scénario de paiement différé, une sortie de la zone couverte par le système du contrôle d'accès sont refusés.

2. Procédé destiné à éviter un abus des droits d'accès d'un système de contrôle d'accès basé sur l'identification, selon la revendication 1, **caractérisé en ce que** lors de la première interaction entre le support de client et un dispositif de contrôle d'accès (1, 1') du système de contrôle d'accès, l'identification du support de client à laquelle le droit d'accès est attribué, est choisie et transmise au serveur central (2), où d'une part le droit d'accès est vérifié concernant sa validité et d'autre part en cas de droit d'accès valable la communication est envoyée à l'utilisateur légitime à l'aide du jeu de données mémorisé dans la banque de données dans le serveur central (2), tant que le propriétaire légitime du support de client n'a pas transmis la confirmation nécessaire, le droit d'accès, l'identification du support de client, à laquelle le droit d'accès est attribué, toutes les identifications du support de client, s'il y en a plusieurs, ou toutes les identifications du propriétaire légitime étant bloquées, ce qui a lieu par la mise en place d'un indicateur correspondant dans la banque de données du serveur central (2), l'indicateur étant effacé si le propriétaire légitime transmet la confirmation et si celle-ci est reçue et une vérification normale du droit d'accès sans l'envoi de l'information avec la sommation de confirmation ayant lieu pour chaque autre interaction à l'intérieur du système de contrôle d'accès entre le support de client et les dispositifs de contrôle d'accès (1, 1') pour un temps prédéfini ou pour un nombre prédéfini d'interactions.

3. Procédé destiné à éviter un abus des droits d'accès d'un système de contrôle d'accès basé sur l'identification, selon la revendication 1 ou 2, **caractérisé en ce que** la zone couverte par le système de contrôle d'accès est subdivisée en parties de zone, le procédé étant exécuté à chaque première interaction entre un dispositif de contrôle d'accès (1, 1') et un support de client dans les parties de zone respectives.

4. Procédé destiné à éviter un abus des droits d'accès d'un système de contrôle d'accès basé sur l'identification, selon l'une quelconque des revendications précédentes, **caractérisé en ce que** pour le cas d'un système de contrôle d'accès d'un parc de stationnement couvert une confirmation est nécessaire à chaque entrée indépendamment du fait de savoir si une entrée ayant eu préalablement lieu du propriétaire légitime du support de client a été confirmée.

5. Procédé destiné à éviter un abus des droits d'accès d'un système de contrôle d'accès basé sur l'identification, selon l'une quelconque des revendications précédentes, **caractérisé en ce que** pour le cas d'un système de contrôle d'accès avec un scénario de paiement différé, la réception de la confirmation de l'utilisateur légitime déclenche une opération de paiement correspondante par le biais de données de compte ou de carte de crédit mémorisées dans le serveur central (2) ou à introduire par l'utilisateur.
